# EUROPÄISCHE PATENTANMELDUNG

(11) **EP 3 855 011 A1**
(43) Veröffentlichungstag der Anmeldung: **28.07.2021**
(21) Anmeldenummer: 20209414.0
(22) Anmeldetag: 24.11.2020
(51) Int. Cl.: F02K 9/92, F42B 39/20

(54) **VORRICHTUNG ZUR UMLENKUNG VON AUS EINER DÜSE EINES FLUGKÖRPERS AUSTRETENDEN ANTRIEBSFLUIDEN SOWIE SYSTEM MIT EINER DERARTIGEN VORRICHTUNG**

(30) Priorität: 22.01.2020 DE 102020000371
(71) Anmelder: MBDA Deutschland GmbH, 86529 Schrobenhausen (DE); Bayern-Chemie Gesellschaft für flugchemische Antriebe mbH, 84544 Aschau am Inn (DE)
(72) Erfinder: KÜHNEL, Anton, 92280 Kastl (DE); KLEINKE, Manuel, 85254 Sulzemoos (DE); NAUMANN, Karl Wieland, 84453 Mühldorf (DE); WEIGAND, Alexander, 84559 Kraiburg (DE)
(74) Vertreter: Isarpatent

(57) **Zusammenfassung**

Die vorliegende Erfindung schafft eine Vorrichtung (1) zur Umlenkung von aus einer Düse (13) eines Flugkörpers (2), insbesondere eines Lenkflugkörpers, austretenden Antriebsfluiden, mit: einem Gehäuse (10), welches sich in axialer Richtung (X1) erstreckt und einen Aufnahmebereich (11) aufweist; einem Eintrittsöffnungsbereich (13) zur Aufnahme der aus der Düse (13) austretenden Antriebsfluide, welcher an einem düsenseitigen Endbereich des Gehäuses (10) vorgesehen ist; einem Befestigungsmittel (14), welches an dem Gehäuse (10) derart vorgesehen ist, dass das Befestigungsmittel (14) mit einem komplementären Befestigungsgegenstück (23) des Flugkörpers (2) lösbar verbindbar ist; und mindestens einem Austrittsöffnungsbereich (15), welcher in einem radialen Bereich des Gehäuses (10) derart vorgesehen ist, dass der Betrag der axialen Vektorkomponente der aus dem mindestens einen Austrittsöffnungsbereich (15) austretenden Antriebsfluide in Bezug auf den Betrag der axialen Vektorkomponente der in den Eintrittsöffnungsbereich (13) eintretenden Antriebsfluide reduziert ist. Des Weiteren schafft die vorliegende Erfindung ein System (4) mit einer derartigen Vorrichtung (1).

## Beschreibung

Die vorliegende Erfindung betrifft eine Vorrichtung zur Umlenkung von aus einer Düse eines Flugkörpers, insbesondere eines Lenkflugkörpers, austretenden Antriebsfluiden sowie ein System mit einer derartigen Vorrichtung.

In einem Flugkörper, beispielsweise in Form eines Lenkflugkörpers, eines Marschflugkörpers, einer ballistischen Rakete oder einer ungelenkten Rakete, kann ein Treibsatz mitgeführt werden, welcher zum Antreiben des Flugkörpers umgesetzt wird. Zur Erfüllung der Sicherheitsanforderungen im Rahmen eines Fast-Cook-Off, das heißt der Flugkörper wird einem Kerosinfeuer oder Vergleichbarem für einen längeren Zeitrahmen ausgesetzt, werden Maßnahmen beispielsweise zur Neutralisierung der Antriebsleistung ergriffen. Dies bedeutet, dass der Antrieb, welcher das Start- und Marschtriebwerk beinhaltet, bei einem unbeabsichtigten durch die einwirkende Hitze bedingten Umsetzten der im Treibsatz chemisch gespeicherten Energie keinen oder nur einen sehr geringen Schub erzeugt.

Im Falle einer Reaktion des Treibsatzes und einer Freisetzung der Energie steigt der Druck innerhalb des Druckkörpers. Dabei ist vor allem die beim Umsetzten des Treibsatzes zurückgelegte Wegstrecke von Interesse. Daher ist die maximal zurückgelegte Wegstrecke beispielsweise im Falle eines Kerosinbrandes oder vergleichbaren Hitzequellen definiert, die der Flugkörper aus eigener Kraft zurücklegen darf. Eine Lösung nach dem Stand der Technik besteht darin, bestimmte chemische Zusammensetzungen der Treibsätze zur Erfüllung dieser Sicherheitsanforderungen vorzusehen. Eine weiterer Ansatz nach dem Stand der Technik ist die Vermeidung eines signifikanten Druckaufbaus innerhalb des Druckbehälters des Triebwerks. Dies kann durch eine Druckhülle aus Aluminium oder Verbundwerkstoffen geschehen. Diese Optionen bedingen allerdings eine Berücksichtigung bereits während der zeit- und kostenintensiven Vorentwicklung und bringen ferner gegebenenfalls Einbußen in der ballistischen Leistung mit sich.

Vor diesem Hintergrund liegt der vorliegenden Erfindung die Aufgabe zugrunde, eine vereinfachte und kostengünstigere Lösung für eine sichere Lagerung und Handhabung von Flugkörpern bereitzustellen.

Erfindungsgemäß wird diese Aufgabe gelöst durch eine Vorrichtung mit den Merkmalen des Patentanspruchs 1 sowie durch ein System mit den Merkmalen des Patentanspruchs 13.

Demgemäß wird eine Vorrichtung zur Umlenkung von aus einer Düse eines Flugkörpers, insbesondere eines Lenkflugkörpers, austretenden Antriebsfluiden, mit: einem Gehäuse, welches sich in axialer Richtung erstreckt und einen Aufnahmebereich aufweist; einem Eintrittsöffnungsbereich zur Aufnahme der aus der Düse austretenden Antriebsfluide, welcher an einem düsenseitigen Endbereich des Gehäuses vorgesehen ist; einem Befestigungsmittel, welches an dem Gehäuse derart vorgesehen ist, dass das Befestigungsmittel mit einem komplementären Befestigungsgegenstück des Flugkörpers lösbar verbindbar ist; und mindestens einem Austrittsöffnungsbereich, welcher in einem radialen Bereich des Gehäuses derart vorgesehen ist, dass der Betrag der axialen Vektorkomponente der aus dem mindestens einen Austrittsöffnungsbereich austretenden Antriebsfluide in Bezug auf den Betrag der axialen Vektorkomponente der in den Eintrittsöffnungsbereich eintretenden Antriebsfluide reduziert ist.

Darüber hinaus wird ein System zur Umlenkung von aus einer Düse eines Flugkörpers, insbesondere eines Lenkflugkörpers, austretenden Antriebsfluiden, bereitgestellt: mit einer erfindungsgemäßen Vorrichtung und einem Flugkörper mit einem komplementären Befestigungsgegenstück, wobei das Befestigungsmittel der Vorrichtung mit einem komplementären Befestigungsgegenstück des Flugkörpers lösbar verbunden ist.

Die der vorliegenden Erfindung zugrunde liegende Idee besteht darin eine an den Flugkörper anbindbare Vorrichtung zu schaffen, mit Hilfe dessen der Vorschub des Flugkörpers bei einem unbeabsichtigten Umsetzen des Treibsatzes reduziert wird und kein signifikanter resultierender, gerichteter Schubvektor entsteht. Somit können unkontrollierte Bewegungen des Flugkörpers während der Lagerung und Handhabung vermieden werden. Durch die einfache Ausgestaltung des Befestigungsmittels sowie des komplementären Befestigungsgegenstücks ist es im einfachsten Fall möglich die Vorrichtung manuell und ohne weitere Verbindungselemente mit dem Flugkörper lösbar zu verbinden. Da die bestehenden Designs beispielsweise der Düse von Flugkörpern lediglich geringfügige Modifikationen zur Montage der Vorrichtung benötigen, kann die erfindungsgemäße Lösung mit sehr geringem Zeit- und Kostenaufwand realisiert werden.

Vorteilhafte Ausgestaltungen und Weiterbildungen ergeben sich aus den weiteren Unteransprüchen sowie aus der Beschreibung unter Bezugnahme auf die Figuren.

Gemäß einer bevorzugten Weiterbildung können die aus dem mindestens einen Austrittsöffnungsbereich austretenden Antriebsfluide in einer um in etwa 90° geänderten Richtung, vorzugsweise in einer zwischen 60° und 120° geänderten Richtung, in Bezug auf die in den Eintrittsöffnungsbereich eintretenden Antriebsfluide austreten. Somit können die austretenden Antriebsfluide in verschiedene Richtungen austreten und sich die Vektoren zumindest teilweise gegenseitig kompensieren. Auf diese Weise kann die Summe der Schubkräfte, die auf den Flugkörper, insbesondere in axialer Richtung, wirken, reduziert werden.

Gemäß einer weiteren bevorzugten Weiterbildung kann der Betrag der axialen Vektorkomponente der aus dem mindestens einen Austrittsöffnungsbereich austretenden Antriebsfluide in Bezug auf den Betrag der axialen Vektorkomponente der in den Eintrittsöffnungsbereich eintretenden Antriebsfluide um mindestens 95 %, insbesondere um mindestens 98 %, reduziert sein. Somit können die Schubkräfte auf den Flugkörper in axialer Richtung so weit reduziert werden, dass sich der Flugkörper bei einem unbeabsichtigten Umsetzen des Treibsatzes und Ausströmen aus der Düse in axialer Richtung nicht in axialer Richtung bewegt.

Gemäß einer weiteren bevorzugten Weiterbildung können sich die radialen Vektorkomponenten der aus dem mindestens einen Austrittsöffnungsbereich austretenden Antriebsfluide nahezu vollständig, vorzugsweise vollständig, kompensieren. Somit können Drehmomente auf den Schwerpunkt des Flugkörpers und damit ferner Taumel- oder Kreiselbewegungen des Flugkörpers vermieden werden.

Gemäß einer weiteren bevorzugten Weiterbildung kann der mindestens eine Austrittsöffnungsbereich eine Vielzahl an gleichgeformten Austrittsöffnungen, vorzugsweise eine gerade Anzahl an gleichgeformten Austrittsöffnungen, insbesondere sechs gleichgeformte im Wesentlichen rechteckige Austrittsöffnungen, aufweisen. Die Austrittsöffnungen sind nicht auf irgendwelche Formen beschränkt, sondern können gekrümmte oder geradlinige Abschnitte oder Kombinationen daraus aufweisen. Somit kann der gesamte Austrittsöffnungsbereich ausreichend groß vorgesehen sein und gleichzeitig die Struktur der Vorrichtung stabil gehalten werden. Ferner können bei einer geraden Anzahl an Austrittsöffnungen jeweils zwei Austrittsöffnungen radial gegenüberliegen und auf diese Weise sich die Vektoren der durch diese beiden Austrittsöffnungen austretenden Antriebsfluide kompensieren.

Gemäß einer weiteren bevorzugten Weiterbildung kann der mindestens eine Austrittsöffnungsbereich eine Vielzahl an Austrittsöffnungen gleichmäßig radial, vorzugsweise im Wesentlichen gleich große Austrittsöffnungen, insbesondere gleich große und gleichgeformte Austrittsöffnungen, radial gegenüberliegend, an dem Gehäuse angeordnet aufweisen. Somit können die aus den Austrittsöffnungen austretenden Antriebsfluide bestmöglich in einer Ebene senkrecht zu den in den Eintrittsöffnungsbereich eintretenden Antriebsfluiden gleichmäßig verteilt werden. Auf diese Weise kann der Schub sowohl in axialer Richtung als auch in radialer Richtung kompensiert werden.

Gemäß einer weiteren bevorzugten Weiterbildung kann das Befestigungsmittel als Gewinde, Bajonettverschluss und/oder Verbindung mit Verbindungselementen, insbesondere Schrauben und/oder Stiften, oder dergleichen ausgebildet sein, um insbesondere axiale Kräfte abzustützen. Somit kann ein einfaches und kostengünstiges Befestigungsmittel bereitgestellt werden, welches zudem hohe Belastungen, insbesondere in axialer Richtung, aushält.

Gemäß einer weiteren bevorzugten Weiterbildung kann zumindest eine innere Oberfläche des Gehäuses einen Hitzeschild aus keramischem und/oder ablatierendem Werkstoff aufweisen. Somit kann das Gehäusematerial vor den hohen Temperaturen der austretenden Antriebsfluide geschützt werden, sodass das Gehäusematerial geringere Anforderungen an die Hitzebeständigkeit aufweisen kann und dadurch kostengünstiger ausgebildet sein kann.

Gemäß einer weiteren bevorzugten Weiterbildung kann das Gehäuse aus Leichtmetall, Metall, Stahl und/oder Titan und/oder Legierungen daraus, vorzugsweise Baustahl oder Chrom-Nickel-Stahl, hergestellt sein. Somit kann die Vorrichtung den hohen Temperaturen der austretenden Antriebsfluide zumindest so lange widerstehen und seine Funktion aufrechterhalten, bis der komplette Treibsatz des Flugkörpers umgesetzt wurde.

Gemäß einer weiteren bevorzugten Weiterbildung kann die Vorrichtung ferner einen Griff aufweisen, welcher vorzugsweise in einem düsenabgewandten Bereich des Gehäuses zur einfachen Handhabung der Vorrichtung vorgesehen ist. Auf diese Weise kann die Vorrichtung leichter gehalten oder manuell mit dem komplementären Befestigungsgegenstück verbunden bzw. gelöst werden.

Gemäß einer weiteren bevorzugten Weiterbildung können das Gehäuse und/oder der Griff derart ausgebildet sein, dass die Vorrichtung mit einer Verpackung, vorzugsweise formschlüssig, verbunden ist, wobei die Vorrichtung relativ zu der Verpackung um die axiale Richtung des Gehäuses drehbar ist. Somit kann die Vorrichtung zusammen mit der Verpackung an dem Flugkörper angebracht bzw. demontiert werden. Auf diese Weise können Montageschritte eingespart werden und kann abgesichert werden, dass die Vorrichtung vor dem Bestücken eines Werfers von dem Flugkörper demontiert ist. Die Verpackung kann beispielsweise ein Material aus Zellulose oder Kunststoff, insbesondere expandierbarem Polypropylen, umfassen.

Gemäß einer weiteren bevorzugten Weiterbildung kann das Gehäuse ferner eine Umlenkeinrichtung zur Umlenkung der in den Eintrittsöffnungsbereich eintretenden Antriebsfluide in Richtung des mindestens einen Austrittsöffnungsbereichs aufweisen. Die Umlenkeinrichtung kann als Kegel, Kegelstumpf, Pyramide, Kanal, Rinne, gekrümmter Gehäuseabschnitt oder dergleichen ausgebildet sein. Ferner kann die Umlenkungseinrichtung innerhalb des Gehäuses oder in Kontakt mit dem Gehäuse angeordnet sein oder ein Abschnitt des Gehäuses sein. Auf diese Weise kann die Umlenkung der in den Eintrittsöffnungsbereich eintretenden Antriebsfluide unterstützt werden.

Gemäß einer weiteren bevorzugten Weiterbildung kann das komplementäre Befestigungsgegenstück an der Düse, an einem Aktuatorträger oder an einem Gehäuseabschnitt des Flugkörpers vorgesehen sein. Auf diese Weise kann die Vorrichtung an einer Stelle des Flugkörpers angebracht werden, die die hohen Kräfte durch die austretenden Antriebsfluide ohne zu versagen aufnehmen kann und dabei nur einen geringen Massezuwachs aufweist. Ferner kann das komplementäre Befestigungsgegenstück somit mit sehr geringem Aufwand auf bestehende Konstruktionen von Flugkörpern angepasst werden.

Gemäß einer weiteren bevorzugten Weiterbildung kann der Betrag der axialen Vektorkomponente und/oder der Betrag der Summe der radialen Vektorkomponenten der aus dem mindestens einen Austrittsöffnungsbereich austretenden Antriebsfluide kleiner sein als eine maximale Haftreibung, welche der Flugkörper in einer Verpackung gegenüber einem ihn kontaktierenden Gegenstand, beispielsweise einem Lagerhallenboden, aufweist. Die Verpackung kann beispielsweise ein Material aus Zellulose oder Kunststoff, insbesondere expandierbarem Polypropylen, umfassen. Die maximale Haftreibung ist von der Gewichtskraft des Flugkörpers mit seiner Verpackung und der Oberflächenbeschaffenheit von der Verpackung sowie beispielsweise dem Lagerhallenboden oder anderen kontaktierenden Gegenständen abhängig. Somit kann der Flugkörper vor unkontrollierten Bewegungen bei einem unbeabsichtigten Umsetzen des Treibsatzes gehindert werden, auch wenn die Summe des Schubs auf den Flugkörper durch das Verteilen der austretenden Antriebsfluide nicht exakt Null beträgt.

Die obigen bevorzugten Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren der Zeichnung angegebenen Weiterbildungen näher erläutert. Es zeigen dabei:
- Fig. 1A: eine schematische Seitenansicht im Schnitt einer Vorrichtung mit Griff in axialer Richtung gemäß einer bevorzugten Weiterbildung der Erfindung;
- Fig. 1B: eine schematische Frontansicht einer Vorrichtung aus Fig. 1A in Richtung der in die Vorrichtung eintretenden Antriebsfluide;
- Fig. 2: eine schematische Seitenansicht einer Vorrichtung aus den Fig. 1A und 1B mit einer formschlüssig verbundenen Verpackung im Schnitt;
- Fig. 3A, 3B: schematische Seitenansichten eines Systems gemäß einer bevorzugten Weiterbildung der Erfindung, wobei sich die Vorrichtung und der Flugkörper in Fig. 3A in einem gelösten Zustand und in Fig. 3B in einem verbundenen Zustand befinden; und
- Fig. 4: eine schematische Perspektivansicht eines ausschnittsweise dargestellten Systems gemäß einer bevorzugten Weiterbildung der Erfindung.

Die beiliegenden Figuren sollen ein weiteres Verständnis der bevorzugten Weiterbildungen der Erfindung vermitteln. Sie veranschaulichen bevorzugte Weiterbildungen und dienen im Zusammenhang mit der Beschreibung der Erklärung von Prinzipien und Konzepten der Erfindung. Andere Weiterbildungen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Gegenteiliges ausgeführt ist - jeweils mit denselben Bezugszeichen versehen.

Antriebsfluide im Sinne der vorliegenden Erfindung sind Antriebsgase und Antriebsflüssigkeiten, welche auch kondensierte Materie, beispielsweise Partikel, das heißt Feststoffe, enthalten können.

Die Bewegungen der austretenden Antriebsfluide im Sinne der vorliegenden Erfindung sind mittels Vektoren beschrieben. Wie in der Mathematik üblich, beinhaltet der Vektor eine Richtung und einen Betrag und ist zur Betrachtung in einem Koordinatensystem in Vektorkomponenten zerlegt.

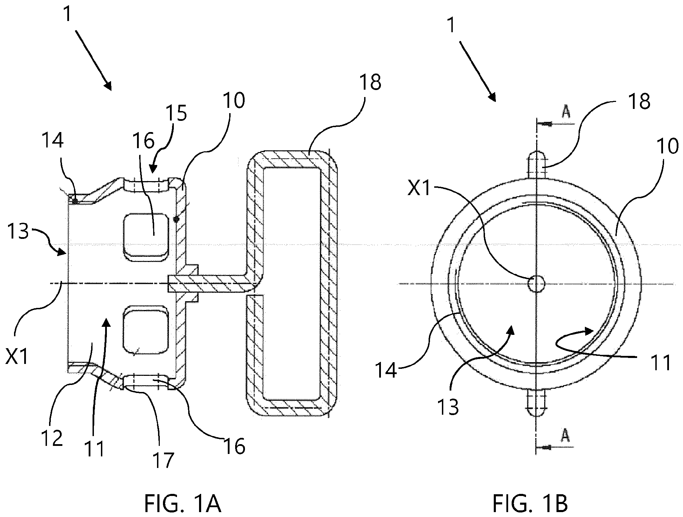

Figuren 1A und 1B zeigen eine schematische Seitenansicht im Schnitt einer Vorrichtung 1 mit Griff 18 in axialer Richtung X1 gemäß einer bevorzugten Weiterbildung der Erfindung bzw. eine schematische Frontansicht einer Vorrichtung 1 aus Fig. 1A in Richtung der in die Vorrichtung 1 eintretenden Antriebsfluide.

Wie in den Fig. 1A und 1B ersichtlich, weist die Vorrichtung 1 ein Gehäuse 10 auf, welches sich in axialer Richtung X1 der Vorrichtung 1 erstreckt und einen Aufnahmebereich 11 aufweist. In einer vorzugsweisen Ausgestaltung ist das Gehäuse 10 im Wesentlichen ringförmig, insbesondere rotationssymmetrisch, um die axiale Richtung X1 ausgebildet. Dabei ist das Gehäuse 10 nicht auf runde Ausgestaltungen beschränkt, sondern kann auch gerade Abschnitte aufweisen und beispielsweise als Quader oder Würfel mit oder ohne abgerundeten Kanten oder ähnlichem ausgebildet sein. Die Wandstärke des Gehäuses 10 ist in der dargestellten Weiterbildung gleichmäßig ausgebildet, kann aber auch variieren und jede beliebige Wandstärke aufweisen. In einer vorzugsweisen Ausgestaltung ist das Gehäuse 10 aus Baustahl oder Chrom-Nickel-Stahl hergestellt. Das Gehäuse 10 kann allerdings auch aus anderen mechanisch geeigneten Materialen, wie Leichtmetall, Metall, Stahl und/oder Titan und/oder Legierungen daraus, hergestellt sein. Die Oberfläche 12 des Gehäuses 10 ist in der vorliegenden bevorzugten Weiterbildung unbearbeitet und/oder unbeschichtet. Allerdings kann zumindest eine innere Oberfläche 12 des Gehäuses 10 einen Hitzeschild aus keramischem und/oder ablatierendem Werkstoff aufweisen. Der Aufnahmebereich 11 des Gehäuses 10 kann beispielsweise als Hohlraum oder dergleichen ausgebildet sein. Der Hohlraum kann ferner beispielsweise mehrere miteinander verbundene Hohlräume aufweisen. Außerdem können an dem Gehäuse 10 zur Steigerung seiner Stabilität beispielsweise auch Streben (nicht dargestellt) vorgesehen sein.

Darüber hinaus illustrieren die Figuren 1A und 1B die Vorrichtung 1 mit einem Eintrittsöffnungsbereich 13 zur Aufnahme der aus einer Düse austretenden Antriebsfluide auf, welcher an einem düsenseitigen Endbereich des Gehäuses 10 vorgesehen ist. Die aus der Düse austretenden Antriebsfluide können Bestandteile nach einer Verbrennung von Luftfahrtbetriebsstoffen, wie beispielsweise von Kerosin, von flüssigem Wasserstoff oder von Hydrazin, und/oder eines Oxidators umfassen. Zusätzlich oder alternativ kann kondensierte Materie bei der Verbrennung der bereits genannten Betriebsstoffe entstehen und austreten, wobei die kondensierte Materie ferner Inhaltsstoffe von festen Treibstoffen, beispielsweise Schwarzpulver, Zellulosenitratpulver oder Aluminiumpulver, und/oder des Brennkammermaterials umfassen kann. Durch den Schub der austretenden Antriebsfluide können Beschleunigungen bis zu in etwa 20 m/s² auftreten. Um die aus der Düse 20 austretenden Antriebsfluide weitestgehend aufzunehmen, kann der Eintrittsöffnungsbereich 13 beispielsweise größer als die Querschnittsfläche der Düse an ihrem freien Ende 22 sein und nahe an der Düse 20, aus der die Antriebsfluide austreten, angeordnet sein.

Ferner weist die Vorrichtung 1 gemäß der vorliegenden bevorzugten Weiterbildung ein Befestigungsmittel 14 auf, welches an dem Gehäuse 10 derart vorgesehen ist, dass das Befestigungsmittel 14 mit einem komplementären Befestigungsgegenstück 23 des Flugkörpers 2 lösbar verbindbar ist. Das Befestigungsmittel 14 ist vorzugsweise als Gewinde ausgebildet. Ohne dabei eine erschöpfende Aufzählung abzugeben kann das Befestigungsmittel 14 alternativ als Bajonettverschluss oder Verbindung mit Verbindungselementen, insbesondere Schrauben und/oder Stiften, oder dergleichen ausgebildet sein, um insbesondere axiale Kräfte abzustützen. Generell sind sämtliche lösbaren Verbindungen möglich, die besonders zur Abstützung von Kräften in axialer Richtung X1 geeignet sind. In einer vorzugsweisen Ausgestaltung, wie in den Fig. 1A und 1B dargestellt, ist das Befestigungsmittel 14 an der Innenseite des düsenseitigen Endbereichs vorgesehen und mit dem komplementären Befestigungsgegenstück 23 lösbar verbindbar ausgebildet, welches vorzugsweise an dem freien Ende 22 der Düse 20, insbesondere an dessen Außenseite, vorgesehen ist. Das Befestigungsmittel 14 kann ohne Einschränkung durch die bevorzugte Weiterbildung sowohl an der Außenseite als auch an der Innenseite des Gehäuses 10, vorzugsweise des radialen Bereichs des Gehäuses 10, insbesondere des düsenseitigen Endbereichs des Gehäuses 10, vorgesehen sein. In einer bevorzugten Ausgestaltung definiert die Anordnung und Ausrichtung des Befestigungsmittels 14 die Größe des Eintrittsöffnungsbereichs 20.

Wie insbesondere in Fig. 1A ersichtlich, weist die Vorrichtung 1 ferner mindestens einen Austrittsöffnungsbereich 15 auf, welcher in einem radialen Bereich des Gehäuses 10 und von dem Eintrittsöffnungsbereich 13 beabstandet derart vorgesehen ist, dass der Betrag der axialen Vektorkomponente der aus dem mindestens einen Austrittsöffnungsbereich 15 austretenden Antriebsfluide in Bezug auf den Betrag der axialen Vektorkomponente der in den Eintrittsöffnungsbereich eintretenden Antriebsfluide reduziert ist. Gemäß einer bevorzugten Weiterbildung weist der mindestens eine Austrittsöffnungsbereich 15 sechs gleichgeformte im Wesentlichen rechteckige Austrittsöffnungen 16 auf. Der mindestens eine Austrittsöffnungsbereich 15 ist jedoch nicht auf sechs oder eine einstellige Anzahl von Austrittsöffnungen 16 beschränkt, sondern kann eine Vielzahl an, beispielsweise gleichgeformten, Austrittsöffnungen 16, vorzugsweise eine gerade Anzahl an gleichgeformten Austrittsöffnungen 16, aufweisen. Die Austrittsöffnungen 16 sind ferner nicht auf irgendwelche Formen beschränkt, sondern können gekrümmte oder geradlinige Abschnitte oder Kombinationen daraus aufweisen, zum Beispiel Kreise, Ovale oder Vielecke mit oder ohne abgerundeten Ecken oder ähnlichem. Darüber hinaus kann die Vielzahl an Austrittsöffnungsbereichen 16 gleichmäßig radial, vorzugsweise im Wesentlichen gleich große Austrittsöffnungen 16, insbesondere gleich große und gleichgeformte Austrittsöffnungen 16, radial gegenüberliegend, an dem Gehäuse 10 angeordnet sein. Insgesamt kann der mindestens eine Austrittsöffnungsbereich 15 größer als, kleiner als oder in etwa so groß wie der Eintrittsöffnungsbereich 13 sein. Die Berandungen 17 der sechs Austrittsöffnungen 16 der bevorzugten Weiterbildung sind gerade und in einem rechten Winkel zur axialen Richtung X1 ausgebildet. Die Berandungen 17 der Austrittsöffnungen 16 können jedoch auch rund und/oder in beliebigen Winkeln in Bezug auf die axiale Richtung X1 ausgebildet sein. Die Anzahl, die Form und die Anordnung der Austrittsöffnungen 16 sind vorzugsweise derart geeignet zu wählen, dass sich die Vektoren der aus dem mindestens einen Austrittsöffnungsbereich 15 austretenden Antriebsfluide nahezu vollständig, insbesondere vollständig, kompensieren.

Gemäß der bevorzugten Weiterbildung aus den Figuren 1A und 1B weist die Vorrichtung 1 ferner einen Griff 18 auf, welcher vorzugsweise in einem düsenabgewandten Bereich des Gehäuses 10 zur einfachen Handhabung der Vorrichtung 1 vorgesehen ist. Der Griff 18 kann jegliche runde, eckige oder kombinierte Querschnittsform aufweisen. Darüber hinaus kann der Griff 18 auch als übliches Handwerkzeug, beispielsweise als Vierkant-Aufsteckschlüssel, ausgebildet sein und beispielsweise über eine Welle-Nabe-Verbindung mit dem Gehäuse 10 verbindbar sein. Ferner kann der Griff 18 aus einem oder mehreren Bauteilen zusammengesetzt sein, wobei der Griff 18 in allen Fällen vorzugsweise mit einer Hand gehandhabt werden kann und insbesondere einen Hebelmechanismus in Bezug auf die axiale Richtung X1 bereitstellt.

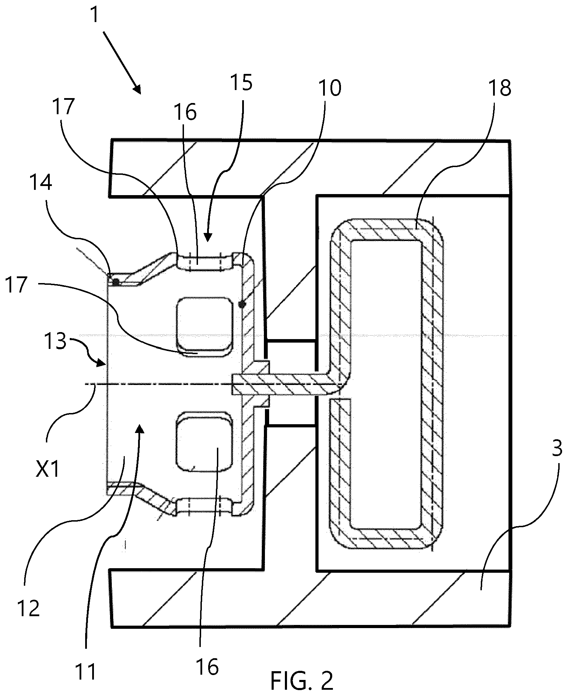

Fig. 2 zeigt eine schematische Seitenansicht einer Vorrichtung 1, die im Wesentlichen der Vorrichtung 1 aus Fig. 1A und 1B entspricht, mit einer formschlüssig verbundenen Verpackung 3 im Schnitt.

In einer bevorzugten Weiterbildung kann der Griff 18 derart ausgebildet sein, dass die Vorrichtung 1 mit einer Verpackung 3 bevorzugt formschlüssig verbunden ist, wobei die Vorrichtung 1 relativ zu der Verpackung 3 um die axiale Richtung X1 des Gehäuses 10 drehbar ist. Wie in Fig. 2 illustriert, kann die Verpackung 3 die Vorrichtung 1 umgeben, wobei ein Abschnitt der Verpackung 3 zwischen dem Gehäuse 10 und dem Griff 18 derart angeordnet ist, dass eine Aussparung in diesem Abschnitt der Verpackung 3 einen Übergangsbereich des Griffes 18 zwischen dem Gehäuse 10 und dem Griff 18 ausspart und das Gehäuse 10 und der Griff 18 vorzugsweise größer ausgebildet sind als die Aussparung. Somit sind die Vorrichtung 1 und die Verpackung 3 zusammen an dem Flugkörper 2 montier- bzw. demontierbar. Die Verpackung 3 kann beispielsweise aus Zellulose oder Kunststoff, insbesondere expandierbarem Polypropylen, hergestellt sein.

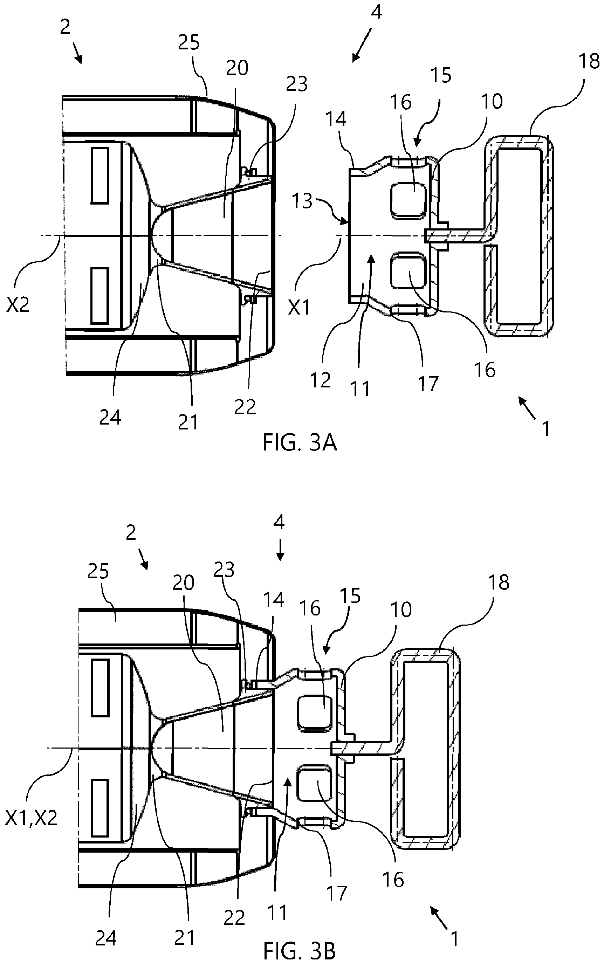

Die Figuren 3A und 3B zeigen schematische Seitenansichten eines Systems 4 gemäß einer weiteren bevorzugten Weiterbildung der Erfindung, wobei sich die Vorrichtung 1 und der Flugkörper 2 in Fig. 3A in einem gelösten Zustand und in Fig. 3B in einem verbundenen Zustand befinden.

Die Vorrichtung 1 entspricht im Wesentlichen der Vorrichtung 1 aus Fig. 1A und 1B. Der Flugkörper 2 kann bevorzugt als Lenkflugkörper, Marschflugkörper, ballistische Rakete oder ungelenkte Rakete ausgebildet sein.

Gemäß einer weiteren bevorzugten Weiterbildung weist die Düse 20 einen sich aufweitenden konischen Querschnitt auf. Alternativ kann die Düse 20 auch als gleichbleibender zylinderförmiger oder sich verengender konischer Querschnitt ausgebildet sein, ist aber nicht zwangsweise auf die genannten Formen beschränkt, sondern kann auch andere Hohlquerschnitte und/oder Konturen aufweisen oder diese abschnittsweise ändern. Dabei kann die Düse 20 mit einem Ende 21 an einen Motor 24 oder vergleichbare Antriebsarten des Flugkörpers 2 angebunden sein. Die Düse 20 kann beispielsweise aus Leichtmetall, Metall, Stahl und/oder Titan und/oder Legierungen daraus, vorzugsweise Baustahl oder Chrom-Nickel-Stahl, hergestellt sein. Beispielsweise kann die Oberfläche der Düse 20 ferner einen Hitzeschild aus keramischem und/oder ablatierendem Werkstoff aufweisen. Durch ein Gehäuse 25 des Flugkörpers 2 kann eine äußere Seite der Düse entweder komplett, nicht oder teilweise bevorzugt in einem Abschnitt, insbesondere einem dem freien Ende 22 der Düse 20 entfernten Abschnitt, umschlossen sein, sodass das freie Ende 22 der Düse 20 nicht, vollständig oder teilweise als Abschnitt aus dem Gehäuse 25 herausragen kann.

Um die aus der Düse 20 austretenden Antriebsfluide aufzunehmen, korrespondiert der Eintrittsöffnungsbereich 13 in einer bevorzugten Weiterbildung im Wesentlichen mit der Querschnittsfläche der Düse 20 an ihrem freien Ende 22 und ist direkt an der Düse 20 angeordnet. Der Eintrittsöffnungsbereich 13 kann ebenso beispielsweise größer als die Querschnittsfläche der Düse 20 an ihrem freien Ende 22 ausgebildet sein und nahe an der Düse 20, aus der die Antriebsfluide austreten, angeordnet sein.

Gemäß der in den Figuren 3A und 3B illustrierten Weiterbildung ist das komplementäre Befestigungsgegenstück 23 an der Düse 20 vorgesehen. Alternativ kann das komplementäre Befestigungsgegenstück 23 auch an einem Aktuatorträger oder an einem Gehäuseabschnitt 25 des Flugkörpers 2, vorzugsweise im Bereich der Düse 20, vorgesehen sein.

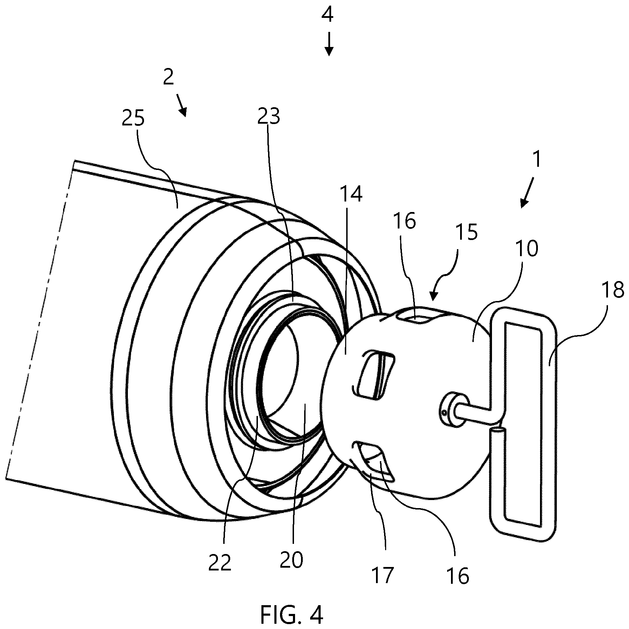

Die axiale Richtung X1 kann im Wesentlichen mit der Richtung der austretenden Antriebsfluide korrespondieren. Vorzugsweise entspricht die axiale Richtung X1 des Gehäuses 10 der Längsachse X2 der Düse 20, wie insbesondere Fig. 3B zeigt. Fig. 4 zeigt eine schematische Perspektivansicht eines ausschnittsweise dargestellten Systems 4 gemäß einer weiteren bevorzugten Weiterbildung der Erfindung.

Die Vorrichtung 1 und der Flugkörper 2 des Systems 4 entsprechen im Wesentlichen der Vorrichtung 1 und dem Flugkörper 2 aus den Figuren 3A und 3B.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Weiterbildungen wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen bevorzugten Weiterbildungen in Bezug auf den beabsichtigten Ein-satzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Vorrichtung
- 2: Flugkörper
- 3: Verpackung
- 4: System
- 10: Gehäuse
- 11: Aufnahmebereich
- 12: Oberfläche
- 13: Eintrittsöffnungsbereich
- 14: Befestigungsmittel
- 15: Austrittsöffnungsbereich
- 16: Austrittsöffnung
- 17: Berandung
- 18: Griff
- 20: Düse
- 21: festes Ende der Düse
- 22: freies Ende der Düse
- 23: komplementäres Befestigungsgegenstück
- 24: Motor
- 25: Gehäuse

- X1: axiale Richtung des Gehäuses
- X2: Längsrichtung der Düse

## Patentansprüche

1. Vorrichtung (1) zur Umlenkung von aus einer Düse (13) eines Flugkörpers (2), insbesondere eines Lenkflugkörpers, austretenden Antriebsfluiden, mit:
einem Gehäuse (10), welches sich in axialer Richtung (X1) erstreckt und einen Aufnahmebereich (11) aufweist;
einem Eintrittsöffnungsbereich (13) zur Aufnahme der aus der Düse (13) austretenden Antriebsfluide, welcher an einem düsenseitigen Endbereich des Gehäuses (10) vorgesehen ist;
einem Befestigungsmittel (14), welches an dem Gehäuse (10) derart vorgesehen ist, dass das Befestigungsmittel (14) mit einem komplementären Befestigungsgegenstück (23) des Flugkörpers (2) lösbar verbindbar ist; und
mindestens einem Austrittsöffnungsbereich (15), welcher in einem radialen Bereich des Gehäuses (10) derart vorgesehen ist, dass der Betrag der axialen Vektorkomponente der aus dem mindestens einen Austrittsöffnungsbereich (15) austretenden Antriebsfluide in Bezug auf den Betrag der axialen Vektorkomponente der in den Eintrittsöffnungsbereich (13) eintretenden Antriebsfluide reduziert ist.

2. Vorrichtung (1) nach Anspruch 1, wobei die aus dem mindestens einen Austrittsöffnungsbereich (15) austretenden Antriebsfluide in einer um in etwa 90° geänderten Richtung, vorzugsweise in einer zwischen 60° und 120° geänderten Richtung, in Bezug auf die in den Eintrittsöffnungsbereich (13) eintretenden Antriebsfluide austreten.

3. Vorrichtung (1) nach Anspruch 1 oder 2, wobei der Betrag der axialen Vektorkomponente der aus dem mindestens einen Austrittsöffnungsbereich (15) austretenden Antriebsfluide in Bezug auf den Betrag der axialen Vektorkomponente der in den Eintrittsöffnungsbereich (13) eintretenden Antriebsfluide um mindestens 95 %, insbesondere um mindestens 98 %, reduziert ist.

4. Vorrichtung (1) nach wenigstens einem der vorhergehenden Ansprüche, wobei sich die radialen Vektorkomponenten der aus dem mindestens einen Austrittsöffnungsbereich (15) austretenden Antriebsfluide nahezu vollständig, vorzugsweise vollständig, kompensieren.

5. Vorrichtung (1) nach wenigstens einem der vorhergehenden Ansprüche, wobei der mindestens eine Austrittsöffnungsbereich (15) eine Vielzahl an gleichgeformten Austrittsöffnungen (16), vorzugsweise eine gerade Anzahl an gleichgeformten Austrittsöffnungen (16), insbesondere sechs gleichgeformte im Wesentlichen rechteckige Austrittsöffnungen (16), aufweist.

6. Vorrichtung (1) nach wenigstens einem der vorhergehenden Ansprüche, wobei der mindestens eine Austrittsöffnungsbereich (15) eine Vielzahl an Austrittsöffnungen (16) gleichmäßig radial, vorzugsweise im Wesentlichen gleich große Austrittsöffnungen (16), insbesondere gleich große und gleichgeformte Austrittsöffnungen (16), radial gegenüberliegend, an dem Gehäuse (10) angeordnet aufweist.

7. Vorrichtung (1) nach wenigstens einem der vorhergehenden Ansprüche, wobei das Befestigungsmittel (14) als Gewinde, Bajonettverschluss und/oder Verbindung mit Verbindungselementen, insbesondere Schrauben und/oder Stiften, oder dergleichen ausgebildet ist, um insbesondere axiale Kräfte abzustützen.

8. Vorrichtung (1) nach wenigstens einem der vorhergehenden Ansprüche, wobei zumindest eine innere Oberfläche (12) des Gehäuses (10) einen Hitzeschild aus keramischem und/oder ablatierendem Werkstoff aufweist.

9. Vorrichtung (1) nach wenigstens einem der vorhergehenden Ansprüche, wobei das Gehäuse (10) aus Leichtmetall, Metall, Stahl und/oder Titan und/oder Legierungen daraus, vorzugsweise Baustahl oder Chrom-Nickel-Stahl, hergestellt ist.

10. Vorrichtung (1) nach wenigstens einem der vorhergehenden Ansprüche, wobei die Vorrichtung (1) ferner einen Griff (18) aufweist, welcher vorzugsweise in einem düsenabgewandten Bereich des Gehäuses (10) zur einfachen Handhabung der Vorrichtung (1) vorgesehen ist.

11. Vorrichtung (1) nach Anspruch 10, wobei das Gehäuse (10) und/oder der Griff (18) derart ausgebildet sind, dass die Vorrichtung (1) mit einer Verpackung (3), vorzugsweise formschlüssig, verbunden ist, wobei die Vorrichtung (1) relativ zu der Verpackung (3) um die axiale Richtung (X1) des Gehäuses (10) drehbar ist.

12. Vorrichtung (1) nach wenigstens einem der vorhergehenden Ansprüche, wobei das Gehäuse (10) ferner eine Umlenkeinrichtung zum Umlenken der in den Eintrittsöffnungsbereich (13) eintretenden Antriebsfluide in Richtung des mindestens einen Austrittsöffnungsbereichs (15) aufweist.

13. System (4) zur Umlenkung von aus einer Düse (13) eines Flugkörpers (2), insbesondere eines Lenkflugkörpers, austretenden Antriebsfluide, mit:
einer Vorrichtung (1) nach wenigstens einem der vorhergehenden Ansprüche; und
einem Flugkörper (2) mit einem komplementären Befestigungsgegenstück (23), wobei das Befestigungsmittel (14) der Vorrichtung (1) mit dem komplementären Befestigungsgegenstück (23) des Flugkörpers (2) lösbar verbunden ist.

14. System (4) nach Anspruch 13, wobei das komplementäre Befestigungsgegenstück (23) an der Düse (13), an einem Aktuatorträger oder an einem Gehäuseabschnitt (25) des Flugkörpers (2) vorgesehen ist.

15. System (4) nach Anspruch 13 oder 14, wobei der Betrag der axialen Vektorkomponente und/oder der Betrag der Summe der radialen Vektorkomponenten der aus dem mindestens einen Austrittsöffnungsbereich (15) austretenden Antriebsfluide kleiner ist als eine maximale Haftreibung, welche der Flugkörper (2) in einer Verpackung (3) gegenüber einem ihn kontaktierenden Gegenstand, beispielsweise einem Lagerhallenboden, aufweist.
